# EUROPEAN PATENT SPECIFICATION

(11) **EP 0 652 620 B1**
(45) Date of publication and mention of the grant of the patent: **19.05.1999**
(21) Application number: 94113908.1
(22) Date of filing: 05.09.1994
(51) Int. Cl.: H02J 7/00

(54) **Method of equalizing the voltage across drive batteries connected in series during recharging, for electric vehicles, and a device for implementing the method**
Verfahren zum Spannungsausgleich von in Reihen geschalteten Traktionsbatterien für Elektrische Fahrzeuge während der Wiederaufladung und Vorrichtung zur Durchführung dieses Verfahrens
Procédé pour égaliser la tension aux bornes de batteries de traction pour véhicules électriques, connectées en série pendant la recharge, et dispositif pour la mise en oeuvre de ce procédé

(30) Priority: 14.10.1993 IT TO930752
(43) Date of publication of application: 10.05.1995
(73) Proprietor: FIAT AUTO S.p.A., 10135 Torino (IT)
(72) Inventor: Varrone, Piergiorgio, I-10025 Pino Torinese (Torino) (IT); Guerzoni, Roberto, I-10045 Piossasco (Torino) (IT)
(74) Representative: Serra, Francesco

(56) References cited:
- WO-A-93/08629
- WO-A-93/10589
- US-A- 4 238 721
- US-A- 5 063 340
- INTELEC '86, 19 October 1986 TORONTO, pages 355-360, BJÖRK 'New trends in batteries and automatic battery charging'

## Description

The present invention relates to a method of equalizing the voltages across drive batteries connected in series during recharging, for electric vehicles, and to a device for implementing the method.

In order to operate, electric vehicles require a large number of drive batteries which are connected in series and, at the moment, are usually lead-acid or lead-gel (recombination) batteries.

Whatever type of battery is used, the autonomy of the vehicle is fairly limited and it is therefore necessary to provide for very frequent recharging of the batteries by means of a battery charger which may be in the vehicle or on the ground and which supplies electrical energy to the batteries, taking it from the mains.

Because they are arranged in series in the vehicle, and because of the difficulty of charging them in parallel (in fact, it would be necessary to have access to each individual battery), recharging is effected in series, and the charging current is therefore the same for all the batteries.

It is also known that there are small voltage differences between one battery and another; these differences may be intrinsic in the construction of the batteries themselves or may be due to different storage periods before fitting in the vehicle, or simply to different temperatures from one battery to another.

Clearly, if charging is carried out in series, even small voltage differences between the various batteries are not compensated, on the contrary they will be increased with each recharging cycle.

It is also known that a battery which is overcharged or undercharged in comparison with the others will quickly be damaged, completely jeopardizing the use of the vehicle in which it is fitted. Methods of equalizing the voltage across drive batteries connected in series are known from WO-A-93 08 629 and US-A-4 238 721. The object of the present invention is to provide a method of equalizing the voltages across drive batteries connected in series during recharging, for electric vehicles, which enables the voltage in all the batteries making up the series to be equalized.

The present invention achieves the aforesaid object by virtue of a method of equalizing the voltage across drive batteries connected in series during recharging, for electric vehicles according to claim 1.

The invention also comprises a device for implementing the method given above, having the characteristics specifically referred to in the following claims 2-4.

The invention will now be described by way of non-limiting example, with reference to the appended drawings, in which:
Figure 1 is a flow-chart of the method according to the invention,
Figure 2 is a block diagram of the device which implements the method of the invention, and
Figure 3 shows the structural details of a portion of Figure 2.

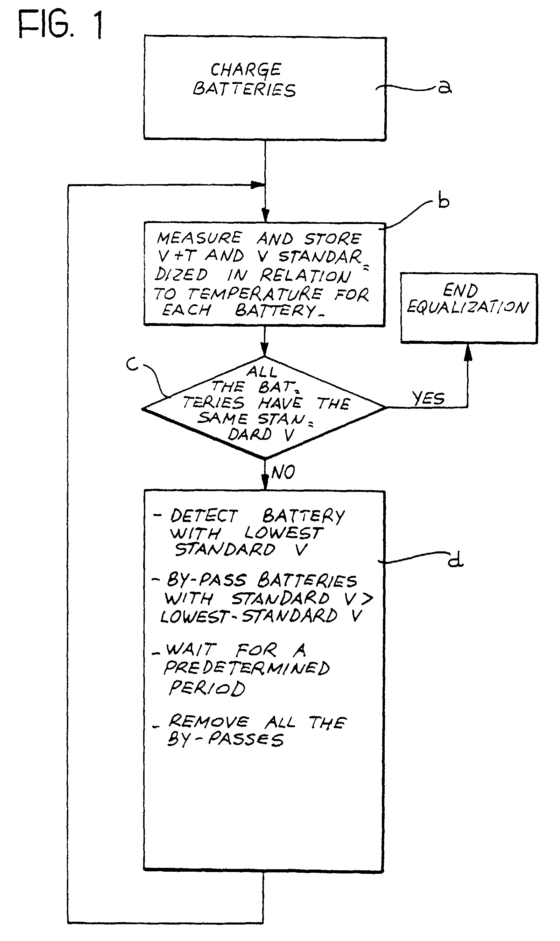

With reference to Figure 1, in step a), the recharging of the batteries is started.

In step b), the voltage and the temperature values of each individual battery are measured and stored and a standardized voltage obtained by applying, to the corresponding voltage measured, a correction factor depending upon the respective temperature measured is derived and stored for each battery.

In step c), the various standardized voltages are compared; if all the batteries have reached the same standardized voltage, the recharging of the batteries is continued according to normal techniques, except for continuous voltage checks and resumption of the equalization procedure, if necessary; if this situation is not confirmed (step d)), it is determined to which battery/ies the lowest standardized voltage corresponds and a current bypass circuit is applied to all the batteries which have standardized voltages higher than the lowest standardized voltage; after a predetermined period of time, all the bypasses are disconnected and all the steps b) to d) are repeated until all the batteries have reached the same standardized voltage.

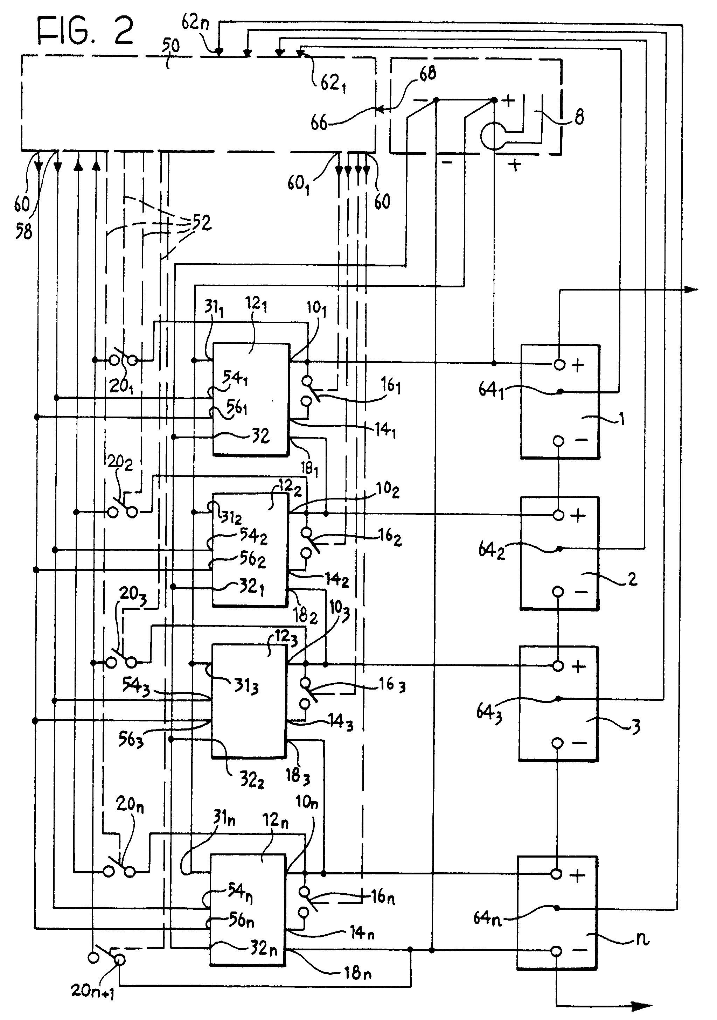

With reference to Figure 2, n batteries, indicated 1 to n, are connected in series for driving an electric vehicle, not shown.

The positive pole of the battery 1 and the negative pole of the battery n are connected to the electric drive motor (not shown). A battery charger 8 has its positive pole connected to the positive pole of the battery 1 and its negative pole connected to the negative pole of the battery n.

The positive poles of the batteries 1 to n are connected, respectively, to the first inputs 10₁ ... 10ₙ of cells 12₁ ... 12ₙ; the first inputs 10₁ ... 10ₙ are connected, respectively, to second inputs 14₁ ... 14ₙ of the cells 12₁ ... 12ₙ by means of respective switches 16₁ ... 16ₙ.

The cells 12₁ to 12ₙ₋₁ have respective first outputs 18₁ ... 18ₙ₋₁ each connected to the respective first input 10₂ ... 10ₙ of the immediately following cell, the first output 18ₙ of the cell 12ₙ being connected to the negative pole of the battery n.

The first inputs of the cells 12₁ ... 12ₙ are connected to respective switches 20₁ ... 20ₙ while the first output 18ₙ of the cell 12ₙ is connected to a switch 20ₙ₊₁.

Each cell 12₁ to 12ₙ has a respective second output 31₁ to 31ₙ and a respective third output 32₁ to 32ₙ, which are connected, respectively, to the positive and negative inputs of the current-stabilizer 8.

A microprocessor 50 controls the switches 20₁ to 20ₙ₊₁ by means of control cables 52 and receives the signals coming from the first inputs 10₁ to 10ₙ of the cells 12₁ to 12ₙ when the switches 20₁ to 20ₙ₊₁ are closed.

Third inputs 54₁ to 54ₙ and fourth inputs 56₁ to 56ₙ of each individual cell 12₁ to 12ₙ are connected to the outputs 58 and 60 respectively of the microprocessor 50.

The switches 16₁ to 16ₙ are connected, respectively, to outputs 60₁ to 60ₙ of the microprocessor 50 to the inputs 62₁ to 62ₙ of which temperature sensors 64₁ to 64ₙ on the batteries 1 to n are connected, an output 66 of the microprocessor 50 being connected to the input 68 of the battery charger 8.

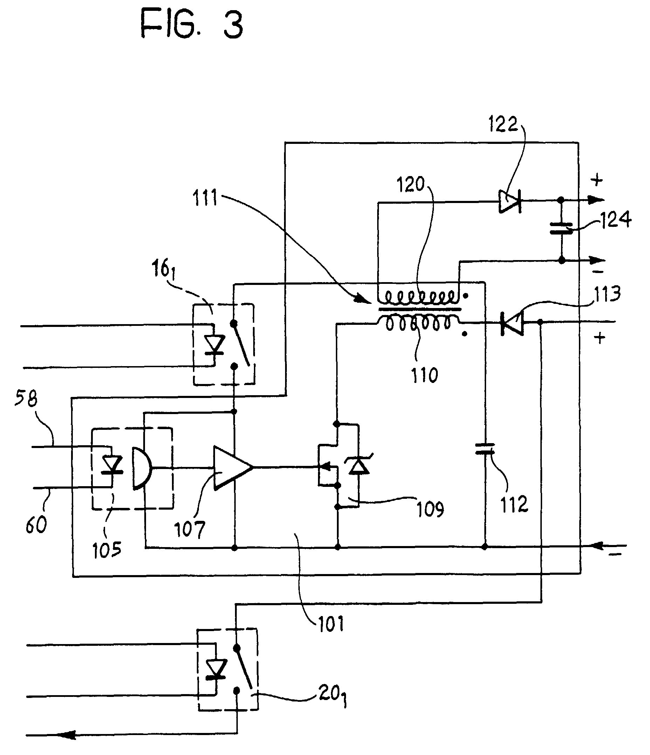

One of the cells 12₁ to 12ₙ, and more precisely the cell 12₁, will now be described with reference to Figure 3, the description applying to the other cells in an identical manner.

In Figure 3, an opto-isolator, indicated 105, receives the chopper signal which comes from the outputs 58, 60 of the microprocessor (not shown in this drawing ) which controls a driver 107 for driving a MOSFET circuit 109.

The opto-isolator 105, the driver 107 and the MOSFET 109 are connected to the negative terminal of the associated battery 1 and the opto-isolator 105 and the driver 107 are also connected to a first contact of the associated switch 16₁ for the on-off control of the cell 12₁.

The MOSFET 109 is connected to the primary winding 110 of a transformer 111, the primary winding 110 being connected to the negative pole of the battery 1 by means of a capacitor 112 and to the positive pole of the battery 1 by means of a rectifier 113; the anode of the rectifier 113, which is connected to the positive pole of the battery 1, being connected to the associated switch 20₁ in order to measure the voltage of the battery 1.

The secondary winding 120 of the transformer 111 is connected to the two poles of the battery charger (not shown in this drawing); the connection to the positive pole is made with the interposition of a rectifier 122; there is a capacitor 124 between the cathode of the rectifier 122 and the connection to the negative pole of the battery charger.

In use, assuming that the batteries 1 to n are at the recharging stage, the charging of the batteries is started by means of the battery charger 8; all the switches 16₁ to 16ₙ and 20₁ to 20ₙ are open.

The voltage across each battery is then measured and stored in the microprocessor 50, for which purpose the microprocessor 50 causes the pair of switches 20₁ and 20₂ to close, thus measuring the voltage V₁ across the battery 1, this voltage value being stored in the microprocessor 50; the pair of switches 20₂ and 20₃ is then closed, thus measuring the voltage V₂ across the battery 2, and so on up to the pair 20ₙ, 20ₙ₊₁, measuring and storing the voltage Vₙ.

Upon completion of the measurement of the voltages V₁ to Vₙ, all the switches 20₁ to 20ₙ₊₁ are open.

Simultaneously with the measurement and storage of the voltages V₁ to Vₙ, the instantaneous temperatures T₁ to Tₙ of the batteries 1 to n are measured and stored in the microprocessor 50 by means of the sensors 64₁ to 64ₙ.

The microprocessor 50 derives and stores, for each battery 1 to n, a standardized voltage obtained by applying to the respective voltage V₁ to Vₙ measured, a correction factor depending upon the respective temperature T₁ to Tₙ measured; the microprocessor 50 then checks whether all the batteries 1 to n have the same standardized voltage and, if so, the equalizing procedure ends, as will be described below; if not, the microprocessor 50 compares the standardized voltages and determines which is the lowest; it then limits the charging current to all the batteries with standardized voltages higher than the minimum standardized voltage.

In order to do this, the microprocessor 50 closes the switches 16₁ to 16ₙ corresponding to the batteries to which the charging current is to be limited, forming a current bypass for these batteries, leaving open only the switch/es corresponding to the battery/ies with the lowest voltage.

In this situation, the cells 12₁ to 12ₙ of which the corresponding switches 16₁ to 16ₙ are closed absorb current, in practice acting as shunts for the associated batteries.

The cells 12₁ to 12ₙ may be of the purely resistive type and, in this case, simply absorb current, transforming it into heat by the Joule effect, or, preferably are of the active type as will be described below, in which some of the current absorbed is restored to the battery charger 8 by means of the outputs 31₁ to 31ₙ and 32₁ to 32ₙ.

The microprocessor 50 pilots the battery charger 8 by means of the connection formed therewith between the terminals 66 and 68, so that it draws from the mains only the portion of current necessary to achieve the nominal charging current, taking account of the current contribution supplied to the battery charger 8 by the cells 12₁ ... 12ₙ to which the bypass has been applied.

The situation just described lasts for a predetermined period of time and when it has elapsed, the microprocessor 50 eliminates all the bypasses, opening all the switches 16₁ to 16ₙ.

The microprocessor 50 then repeats all the steps just described, in order, until all the batteries have reached the same standardized voltage, after which the voltage-equalization procedure is completed and the recharging can take place according to normal techniques, except for continuous voltage checks and resumption of the equalization procedure, if necessary.

The operation of the cell 12₁ will be described with reference to Figure 3, the description applying to all the other cells in an identical manner.

When the switch 16₁ is open, no current circulates in the cell 12₁. If this switch is closed, the MOSFET 109 changes cyclically from the cut-off to the saturation condition, driven by the chopper signal coming from the microprocessor 50 by means of the connections 58 and 60, and an alternating current is produced in the secondary winding 120 of the transformer 111, which current is rectified by the rectifier 122, and is smoothed by the capacitor 124. This current is sent to the battery charger, achieving an energy saving since the battery charger 8, which is piloted by the microprocessor 50, will require from the mains only the difference between amount which is nominally necessary and the amount restored from the cell 12₁.

Naturally, the principle of the invention remaining the same, the details of construction and forms of embodiment may be varied widely with respect to those described and illustrated, without thereby departing from the scope of the present invention as defined by the appended claims. In particular, the circuit components of the cells 12₁ to 12ₙ could be varied widely, the switches 16₁ to 16ₙ and the switches 20₁ to 20ₙ₊₁ could be incorporated in the cells 12₁ to 12ₙ, and the microprocessor 50 could be incorporated in the battery charger 8, or could be the microprocessor already present in the vehicle.

## Claims

1. A method of equalizing the voltages across drive batteries connected in series during recharging, for electric vehicles, by means of a battery charger connected to the electricity-supply mains outside the vehicle, and having its positive output connected to the positive terminal of the first battery of the series and its negative output connected to the negative terminal of the last battery of the series, comprising the following steps, in succession and in order:
a) beginning the recharging of the batteries;
b) measuring and storing the voltage (V₁ to Vₙ) across each battery (1 to n) and its temperature (T₁ to Tₙ);
c) deriving and storing, for each battery (1 to n), a standardized voltage obtained by applying, to the respective voltage (V₁ to Vₙ) measured, a correction factor depending upon the respective temperature (T₁ to Tₙ) measured characterized in that it further comprises the following steps in succession and in order:
d) determining to which battery/ies the lowest standardized voltage corresponds,
e) applying a current bypass to all the batteries (1 to n) with standardized voltages higher than the lowest standardized voltage;
f) continuing to recharge the batteries (1 to n) for a predetermined period of time;
g) eliminating all the bypasses applied;
h) repeating steps b) to g) until all the batteries (1 to n) have equal standardized voltage values and then terminating the equalization procedure.

2. A device for implementing the method according to Claim 1, in which a battery charger (8) recharges a plurality of batteries (1 to n) connected in series, the battery charger (8) having its positive output connected to the positive terminal of the first battery of the series and its negative output connected to the negative terminal of the last battery of the series, comprising
- a microprocessor (50) for piloting the battery charger;
- means (20₁ to 20ₙ₊₁) and (64₁ to 64ₙ) piloted by the microprocessor (50) for enabling the microprocessor (50) to measure the voltage (V₁ to Vₙ) across each battery (1 to n) and its temperature (T₁ to Tₙ), respectively, in order to store the voltage and the temperature in the microprocessor (50), the microprocessor (50) being arranged to derive and store, for each battery (1 to n), a standardized voltage obtained by applying to the respective voltage (V₁ to Vₙ) measured a correction factor depending upon the respective temperature (T₁ to Tₙ) measured characterized in that the microprocessor (50) is arranged to determine to which battery/ies the lowest standardized voltage corresponds, and in that it further comprises:
- means (16₁ to 16ₙ; 12₁ to 12ₙ) piloted by the microprocessor (50) for applying a current bypass to the batteries with standardized voltage values higher than the lowest standardized voltage value, enabling only the battery/ies with the lowest standardized voltage to be recharged with a higher current.

3. A device according to Claim 2, characterized in that the current bypass is achieved by diverting the charging current into active cells (12₁ to 12ₙ) which can recover some of the current supplied by the battery charger (8).

4. A device according to Claim 3, characterized in that each active cell (12₁ to 12ₙ) comprises an opto-isolator (105) connected to the outputs (58, 60) of the microprocessor (50), in order to receive therefrom a chopper signal, the opto-isolator (105) being connected to a driver (107) connected to a MOSFET circuit (109); the opto-isolator (105), the driver (107), and the MOSFET (109) being connected to the negative terminal of the associated battery (1); the opto-isolator (105) and the driver (107) being connected to the first contact of the associated switch (16₁) for the on-off control of the cell (12₁), the MOSFET (109) being connected to the primary winding (110) of a transformer (111), the primary winding (110) being connected to the negative pole of the battery (1) by means of a capacitor (112) and to the positive pole of the battery (1) by means of a rectifier (113); the anode of the rectifier (113) being connected to the positive pole of the battery (1) and to the associated switch (20₁) in order to measure the voltage of the battery (1); the secondary winding (120) of the transformer (111) being connected to the positive pole of the battery charger (8) with the interposition of a rectifier (122); and a capacitor (124) being connected between the cathode of the rectifier (122) and the negative pole of the battery charger (8).

## Patentansprüche

1. Verfahren zum Abgleichen der Spannungen an den Antriebsbatterien für Elektrofahrzeuge, wobei die Antriebsbatterien während der Wiederaufladung in Serie geschaltet sind, mit Hilfe eines Batterieladegeräts, das mit dem Stromnetz außerhalb des Fahrzeugs verbunden ist und dessen positiver Ausgang mit dem positiven Anschluss der ersten Batterie in der Serienschaltung verbunden ist und dessen negativer Ausgang mit dem negativen Anschluss der letzten Batterie in der Serienschaltung verbunden ist, wobei das Verfahren nacheinander und in der Reihenfolge folgende Schritte enthält:
a) Beginn mit dem Wiederaufladen der Batterien;
b) Messen und Speichern der Spannung (V₁ bis Vₙ) an jeder Batterie (1 bis n) sowie deren Temperatur (T₁ bis Tₙ);
c) Herleiten und Speichern für jede Batterie (1 bis n) einer standardisierten Spannung, die man dadurch erhält, dass an die jeweilige gemessene Spannung (V₁ bis Vₙ) ein Korrekturfaktor angelegt wird, der von der jeweiligen gemessenen Temperatur (T₁ bis Tₙ) abhängt,
dadurch gekennzeichnet, dass das Verfahren weiters nacheinander und in der Reihenfolge folgende Schritte aufweist:
d) Feststellen, welcher Batterie/welchen Batterien die niedrigste standardisierte Spannung entspricht;
e) Anlegen einer Strom-Umleitung an alle Batterien (1 bis n) mit standardisierten Spannungen, die höher als die niedrigste standardisierte Spannung sind;
f) Fortfahren mit der Wiederaufladung der Batterien (1 bis n) für ein vorgegebenes Zeitintervall;
g) Beseitigen aller angelegten Umleitungen;
h) Wiederholen der Schritte b) bis g), bis alle Batterien (1 bis n) gleiche standardisierte Spannungswerte besitzen, und dann Beenden des Abgleichvorgangs.

2. Vorrichtung zum Durchführen des Verfahrens gemäß Anspruch 1, wobei ein Batterieladegerät (8) eine Vielzahl von Batterien (1 bis n) wiederauflädt, die in Serie geschaltet sind, wobei das Batterieladegerät (8) mit seinem positiven Ausgang am positiven Anschluss der ersten Batterie der Serienschaltung liegt und mit seinem negativen Ausgang am negativen Anschluss der letzten Batterie der Serienschaltung liegt, wobei die Vorrichtung enthält:
- einen Mikroprozessor (50), um das Batterieladegerät zu steuern;
- Einrichtungen (20₁ bis 20ₙ₊₁) und (64₁ bis 64ₙ), die vom Mikroprozessor (50) gesteuert werden, damit der Mikroprozessor (50) die Spannung (V₁ bis Vₙ) an jeder Batterie (1 bis n) bzw. deren Temperatur (T₁ bis Tₙ) messen kann, um die Spannung und die Temperatur im Mikroprozessor (50) zu speichern, wobei der Mikroprozessor (50) so aufgebaut ist, um für jede Batterie (1 bis n) eine standardisierte Spannung herzuleiten und zu speichern, die man dadurch erhält, dass an die jeweilige gemessene Spannung (V₁ bis Vₙ) ein Korrekturfaktor angelegt wird, der von der jeweiligen gemessenen Temperatur (T₁ bis Tₙ) abhängt, dadurch gekennzeichnet, dass der Mikroprozessor (50) so aufgebaut ist, um festzustellen, welcher Batterie/welchen Batterien die niedrigste standardisierte Spannung entspricht, und dass die Vorrichtung weiters enthält:
- eine Einrichtung (16₁ bis 16ₙ; 12₁ bis 12ₙ), die vom Mikroprozessor (50) gesteuert wird, um an jene Batterien eine Strom-Umleitung anzulegen, deren standardisierte Spannungswerte höher als der niedrigste standardisierte Spannungswert sind, wodurch nur die Batterie/Batterien mit der niedrigsten standardisierten Spannung mit einem höheren Strom wiederaufgeladen werden.

3. Vorrichtung gemäß Anspruch 2, dadurch gekennzeichnet, dass die Strom-Umleitung dadurch erreicht wird, dass der Ladestrom in aktive Zellen (12₁ bis 12ₙ) abgeleitet wird, die einen Teil des Stroms zurückführen können, der vom Batterieladegerät (8) geliefert wird.

4. Vorrichtung gemäß Anspruch 3, dadurch gekennzeichnet, dass jede aktive Zelle (12₁ bis 12ₙ) ein optisches Trennelement (105) enthält, das mit den Ausgängen (58, 60) des Mikroprozessors (50) verbunden ist, um von diesem ein Zerhackersignal zu empfangen, wobei das optische Trennelement (105) mit einer Treiberstufe (107) verbunden ist, die an einer MOSFET-Stufe (109) liegt; das optische Trennelement (105), die Treiberstufe (107) und der MOSFET (109) mit dem negativen Anschluss der zugeordneten Batterie (1) verbunden sind; das optische Trennelement (105) und die Treiberstufe (107) für eine EIN/AUS-Schaltung der Zelle (12₁) am ersten Anschluss des zugeordneten Schalters (16₁) liegen, wobei der MOSFET (109) mit der Primärwicklung (110) eines Transformators (111) verbunden ist, wobei die Primärwicklung (110) über einen Kondensator (112) am negativen Pol der Batterie (1) liegt und über einen Gleichrichter (113) am positiven Pol der Batterie (1) liegt; die Anode des Gleichrichters (113) mit dem positiven Pol der Batterie (1) und mit dem zugeordneten Schalter (20₁) verbunden ist, um die Spannung der Batterie (1) zu messen; die Sekundärwicklung (120) des Transformators (111) über einen dazwischengeschalteten Gleichrichter (122) am positiven Pol des Batterieladegeräts (8) liegt; und ein Kondensator (124) zwischen der Kathode des Gleichrichters (122) und dem negativen Pol des Batterieladegeräts (8) liegt.

## Revendications

1. Procédé d'égalisation des tensions aux bomes de batteries de traction connectées en série pendant la recharge, pour des véhicules électriques, au moyen d'un chargeur de batterie connecté au secteur d'alimentation en électricité à l'extérieur du véhicule et ayant sa sortie positive connectée à la borne positive de la première batterie de la série et sa sortie négative connectée à la borne négative de la dernière batterie de la série, comprenant les étapes qui suivent, en succession et dans l'ordre:
a) démarrage de la recharge des batteries;
b) mesure et stockage de la tension (V₁ à Vₙ) aux bornes de chaque batterie (1 à n) et de sa température (T₁ à Tₙ);
c) dérivation et stockage, pour chaque batterie (1 à n), d'une tension standardisée obtenue en appliquant, sur la tension respective (V₁ à Vₙ) mesurée, un facteur de correction qui dépend de la température respective (T₁ à Tₙ) mesurée,
caractérisé en ce qu'il comprend en outre les étapes qui suivent, en succession et dans l'ordre:
d) détermination de la batterie ou des batteries à laquelle ou auxquelles la tension standardisée la plus faible correspond;
e) application d'une dérivation de courant sur toutes les batteries (1 à n) qui présentent des tensions standardisées supérieures à la tension standardisée la plus faible;
f) poursuite de la recharge des batteries (1 à n) pendant une période temporelle prédéterminée;
g) élimination de toutes les dérivations appliquées;
h) répétition des étapes b) à g) jusqu'à ce que toutes les batteries (1 à n) présentent des valeurs de tensions standardisées égales puis arrêt de la procédure d'égalisation.

2. Dispositif pour mettre en oeuvre le procédé selon la revendication 1, dans lequel un chargeur de batterie (8) recharge une pluralité de batteries (1 à n) connectées en série, le chargeur de batterie (8) ayant sa sortie positive connectée à la bome positive de la première batterie de la série et sa sortie négative connectée à la bome négative de la dernière batterie de la série, comprenant:
un microprocesseur (50) pour piloter le chargeur de batterie;
un moyen (20₁ à 20ₙ₊₁) et (64₁ à 64ₙ) piloté par le microprocesseur (50) pour permettre au microprocesseur (50) de mesurer respectivement la tension (V₁ à Vₙ) aux bomes de chaque batterie (1 à n) et sa température (T₁ à Tₙ) afin de stocker la tension et la température dans le microprocesseur (50), le microprocesseur (50) étant agencé pour dériver et stocker pour chaque batterie (1 à n) une tension standardisée obtenue en appliquant sur la tension respective (V₁ à Vₙ) mesurée un facteur de correction qui dépend de la température respective (T₁ à Tₙ) mesurée, caractérisé en ce que le microprocesseur (50) est agencé pour déterminer à quelle(s) batterie(s) la tension standardisée la plus faible correspond; et
en ce qu'il comprend en outre:
un moyen (16₁ à 16ₙ; 12₁ à 12ₙ) piloté par le microprocesseur (50) pour appliquer une dérivation de courant sur les batteries qui présentent des valeurs de tension standardisées supérieures à la valeur de tension standardisée la plus faible, pour permettre à seulement la ou les batteries présentant la tension standardisée la plus faible d'être rechargée(s) avec un courant plus élevé.

3. Dispositif selon la revendication 2, caractérisé en ce que la dérivation de courant est réalisée en détourant le courant de charge dans des cellules actives (12₁ à 12ₙ) qui peuvent récupérer une certaine part du courant appliqué par le chargeur de batterie (8).

4. Dispositif selon la revendication 3, caractérisé en ce que chaque cellule active (12₁ à 12ₙ) comprend un opto-isolateur (105) connecté aux sorties (58, 60) du microprocesseur (50) afin de recevoir depuis un signal de hacheur, l'opto-isolateur (105) étant connecté à un dispositif de pilotage (107) connecté à un circuit MOSFET (109); l'opto-isolateur (105), le dispositif de pilotage (107) et le MOSFET (109) étant connectés à la bome négative de la batterie associée (1); l'opto-isolateur (105) et le dispositif de pilotage (107) étant connectés au premier contact du commutateur associé (16₁) pour la commande d'activation/désactivation de la cellule (12₁), le MOSFET (109) étant connecté à l'enroulement de primaire (110) d'un transformateur (111), l'enroulement de primaire (110) étant connecté au pôle négatif de la batterie (1) au moyen d'un condensateur (112) et au pôle positif de la batterie (1) au moyen d'un redresseur (113); l'anode du redresseur (113) étant connectée au pôle positif de la batterie (1) et au commutateur associé (20₁) afin de mesurer la tension de la batterie (1); l'enroulement de secondaire (120) du transformateur (111) étant connecté au pôle positif du chargeur de batterie (8) moyennant l'interposition d'un redresseur (122); et un condensateur (124) étant connecté entre la cathode du redresseur (122) et le pôle négatif du chargeur de batterie (8).
